# EUROPÄISCHE PATENTSCHRIFT

(11) **EP 1 207 183 B1**
(45) Veröffentlichungstag und Bekanntmachung des Hinweises auf die Patenterteilung: **14.04.2004**
(21) Anmeldenummer: 00124506.7
(22) Anmeldetag: 09.11.2000
(51) Int. Cl.: C08K 13/02, C08L 23/04

(54) **Formmasse zur Herstellung von aufschäumen- den Brandschutzformteilen**
Molding material for producing foaming fire resisting molds
Masse à mouler pour la fabrication de pièce moulé coup-feu moussant

(43) Veröffentlichungstag der Anmeldung: 22.05.2002
(73) Patentinhaber: Niemann, Hans Dieter, 50169 Kerpen-Horrem (DE)
(72) Erfinder: Ma, Senyuan Dr., 50226 Frechen (DE); Lutzner, Lothar, 51143 Köln (DE)
(74) Vertreter: Sternagel, Fleischer, Godemeyer & Partner Patentanwälte

(56) Entgegenhaltungen:
- EP-A- 0 823 468
- EP-A- 0 824 134
- EP-A- 0 879 870
- DE-A- 19 702 760
- DE-A- 19 856 759
- US-A- 5 934 333
- DATABASE WPI Section Ch, Week 199628 Derwent Publications Ltd., London, GB; Class A18, AN 1996-272812 XP002160884 & JP 08 113662 A (SEKISUI CHEM IND CO LTD) , 7. Mai 1996 (1996-05-07)
- PATENT ABSTRACTS OF JAPAN vol. 1995, no. 08, 29. September 1995 (1995-09-29) & JP 07 118435 A (TOSOH CORP), 9. Mai 1995 (1995-05-09)

## Beschreibung

Die Erfindung betrifft eine Formmasse zur Herstellung aufschäumender Brandschutzformteile, extrudierte Formteile, Spritzgussformteile und Strangpressformteile, die aus dieser Formmasse hergestellt werden, sowie Verfahren zur Herstellung der Formteile.

Im Stand der Technik werden für den passiven Brandschutz Materialien verwendet, die im Brandfall aufschäumen. Solche Materialien werden für erhöhte Brandschutzansprüche überall dort eingesetzt, wo die Gefahr besteht, dass sich das Feuer und der Rauch ausgehend von dem ursprünglichen Brandherd weiter ausbreiten könnten. Die kritischen Stellen, durch die sich Feuer und Rauch verbreiten können, sind die Anschlussstellen der Massivbauelemente, wie zum Beispiel Fugen zwischen Wänden und/oder Decken, Fenster- und Türenrandbereiche, Wandoder Deckendurchbrüche für Versorgungsrohre oder Kanäle, sowie elektrische Kabel. Um eine bestimmte Brandschutzklasse für eine ganze Baueinheit zu erreichen, werden an solchen Stellen sogenannte Intumeszenzmaterialien eingesetzt. Diese Materialien beginnen ab einer bestimmten Temperatur, in der Regel zwischen 110 bis 350 °C zu expandieren. Dabei vergrößert sich das Volumen dieser Materialien um ein Vielfaches. Diese im Brandfall aufschäumenden Materialien können daher in Bauelementen für den Brandschutz als brandschützende Dichtung eingesetzt werden. Die kritischen Stellen, wie Fugen und andere Hohlräume, werden so abgedichtet und die Verbreitung des Feuers und des Rauches effektiv verhindert.

Diese im Brandfall aufschäumenden Materialien liegen zweckmäßigerweise in verschiedenen Formen vor. Für die Abdichtung von Wand- bzw. Deckendurchbrüchen wird üblicherweise eine Brandschutzmasse verwendet. Für das Verschließen der verschiedensten Fugen ist die Streifenware besser geeignet. Zur Sicherung von Schwachstellen unterschiedlichster Form und Konstruktion werden zudem Stanz- und Formteile benötigt.

Die im Brandfall aufschäumenden Materialien des Standes der Technik lassen sich grundsätzlich in drei Kategorien einteilen: In die erste Kategorie fallen Materialien mit gebundenem Kristallwasser, wie beispielsweise Vermikulite und Alkalisilikate.

Zu der zweiten Kategorie gehören Mischungen, die im Brandfall verkohlen und/oder verglasen bzw. keramisieren. Die Intumeszenzbeschichtung funktioniert nach diesem Prinzip. Zu den verkohlenden und damit ein Kohlenstoffgerüst bildenden Stoffen gehören Kohlenhydrate, nämlich Mono-, Di- oder Polysaccharide wie Zucker, Stärke, Cellulose, die gegebenenfalls mit Salzen starker anorganische Säuren wie der Phosphorsäure oder Schwefelsäure und/oder der entsprechenden Polysäuren zusammenwirken. Die Materialien, die bei Brandtemperatur verglasen bzw. keramisieren sind Alkalisilikate, Alkalialumosilikate, Alkalimagnesiasilikate, Phosphate, phosphathaltige Silikate bzw. Aluminate, organische oder anorganische Borverbindungen und Gemische derselben. Intumeszenzbeschichtungen sind im Stand der Technik für den Stahlbau Standard. Dabei wird unter Hitzeeinwirkung eine wärmedämmende Schutzschicht gebildet und schützt das darunter liegende Material und verhindert so das Fortschreiten des Brandes und die Erweichung des Stahlgerüstes. Diese Art von Materialien werden daher als Dämmschichtbildner bezeichnet.

Die dritte Kategorie dieser Materialien enthält Blähgraphit, der durch chemische Behandlung von Graphit hergestellt wird. Dabei wird Graphit mit Substanzen behandelt, meistens starke Säuren und Oxidationsmittel wie Wasserstoffperoxid, wobei die Säuremoleküle in die Gitterstruktur des Graphits eingelagert werden. Durch diese Einlagerung der Behandlungsmittel zwischen den Gitterschichten werden die Gitterschichtenabstände aufgeweitet.

Die auf einem thermoplastischen Trägermaterial basierenden Blähmaterialien werden oft auf Grundlage von weichgemachtem PVC hergestellt. Weitere im Stand der Technik bekannte Polymere sind Polyethylene, Polypropylene, Polyamide, Polyester und deren Gemische.

Die europäische Patentanmeldung 0 849 345 A1 beschreibt eine Formmasse und Formkörper, insbesondere für Brandschutzzwecke, die eine Thermoplastmatrix aufweisen, enthaltend Matrixstabilisatoren und intumeszierende Bestandteile. Dabei werden in der Matrix Thermoplasten, insbesondere Polyethylene, Polypropylene, Polyamide, Polyester oder Gemische derselben verwendet. Weiterhin können in der Matrix Treibmittel, wie z.B. flüssige Kohlenwasserstoffe und Füllmittel, insbesondere anorganischer Art, wie Kaolin, Kreide, Kieselsäure, Gesteinsmehl und dergleichen, sowie Pigmente und viskositätsbeeinflussende Stoffe enthalten sein. In der Matrix können zudem Matrixstabilisatoren verwendet werden, die bei Brandtemperatur verkohlende und/oder verglasende bzw. keramisierende Stoffe enthalten. Als weitere Substanzen werden Blähgraphite, Perlite, wasserhaltige Alkalisilikate und/oder Vermikulite erwähnt. Es finden auch Substanzen Anwendung, die bei Brandtemperaturen gegebenenfalls zusammen mit Antimonverbindungen, wie Antimontrichlorid oder -oxid antikatalytisch brandhemmende und/oder unbrennbare Gase bilden, beispielsweise halogenhaltige Verbindungen, wie Chlorkohlenwasserstoffe und/oder CO₂-abspaltende Verbindungen.

Die Druckschrift RU 2,091,424 beschreibt ein Material, enthaltend Fasergewebe, Polyvinylchlorid, Pentaerythritol und Ammoniumsalze der Phosphorsäure, vorzugsweise bi-substituierte Ammoniumphosphate. Das Material ist in der Lage zu expandieren und dahinter angebrachte Objekte gegen offene Flammen und heiße Temperaturen zu schützen.

Die Druckschrift CA 2,150,600 offenbart ein faserhaltiges Material enthaltend Silikate, Wasser, wasserlösliche oberflächenaktive Substanzen, sowie Mikropartikel, die unter Hitzeeinwirkung expandieren. Die organischen Fasern wurden mit Na₂B₄O₇•10H₂O oder H₃BO₄ behandelt.

Die JP 082 31 756 betrifft Brandschutzmassen, enthaltend Polyalkylen-Ether-Harze, Phosphorverbindungen und Blähgraphite.

Die auf dem Markt erhältlichen, geformten Brandschutzmaterialien werden entweder auf der Basis des Papierherstellungsverfahrens oder des Pressverfahrens hergestellt oder extrudiert. Die Produkte, die nicht extrudiert werden, weisen in der Regel unbefriedigende mechanische Eigenschaften auf. So sind diese nicht biegefest und die Zugfestigkeit ist gering. Weiterhin enthalten diese Produkte in der Regel gesundheitsbedenkliche Fasern. Ein weiterer Nachteil ist, dass diese Produkte oft nur in einer Richtung, nämlich in der Richtung der Dicke, expandieren.

Die weiteren Nachteile der papierähnlichen Produkte bestehen darin, dass sie Wasser und Luftfeuchtigkeit anziehen und aufnehmen. Durch die Feuchtigkeitsaufnahme wird das Aufschäumen dieser Teile bei Hitzeeinwirkung im Falle eines Brandes zum Teil erheblich verzögert. Dadurch können die Spalten und Hohlräume nicht schnell genug ausgefüllt werden, wodurch eine Verbreitung des Rauchs und des Feuers nicht effektiv verhindert werden kann.

Weitere Nachteile bestehen darin, dass die meisten gepressten und extrudierten Streifen Halogene enthalten und im Brandfalle starke Säuren entstehen, die wiederum schwere sekundäre Schäden verursachen. So enthalten die extrudierten Streifen des Standes der Technik in der Regel ein Polymer, nämlich weich gemachtes Poly-Vinyl-Chlorid (PVC). Diese Streifen besitzen zwar im allgemeinen gute mechanische Eigenschaften und expandieren in allen drei Dimensionen. Der Nachteil besteht jedoch darin, dass diese Substanzen einen hohen Anteil Chlor enthalten und im Brandfall daher stark reizende Gase bzw. Säuren erzeugen.

Bei den im Stand der Technik marktüblichen Formteile für die Abdichtung im Brandfall handelt es sich um einfache, handgegossene Formteile, wodurch die Produktionskosten hoch sind.

Ausgehend von dem genannten Stand der Technik war es daher die technische Aufgabe eine Formmasse und Formteile bereitzustellen, die keine gesundheitsschädlichen Bestandteile enthalten, halogen- und faserfrei sind, sowie gegen Luftfeuchtigkeit und Wasser beständig sind. Weiterhin war es die technische Aufgabe Verfahren zur Herstellung von extrudierten Formteilen und Spritzgussformteilen aus der genannten Formmasse bereitzustellen, und Kosten zu reduzieren.

Die technische Aufgabe wird gelöst durch eine Formmasse zur Herstellung von aufschäumenden Brandschutzformteilen, die ein thermoplastisches Elastomer oder ein thermoplastisches Ethylen-Vinylacetat-Copolymer, ein phosphorhaltiges Flammschutzmittel und Blähgraphit enthalten, wobei der Blähgraphit ein gemisch aus mindestens zwei sorten Blähgraphit I und Blängraphit II mit unterschiedlichen Eigenschaften ist und sich der Blähgraphit I ab einer Temperatur von 200°C und der Blähgraphit II ab einer Temperatur von 140°C beginnt auszudehnen.

Als thermoplastische Elastomere im Sinne der Erfindung werden Polymere mit gummielastischem Verhalten verstanden, die bei Raumtemperatur wiederholt mindestens auf das Zweifache seiner Länge gedehnt werden können und nach Aufhebung des für die Dehnung erforderlichen Zwanges sofort wieder annähernd ihre Ausgangslänge annehmen. Die thermoplastischen Elastomere werden bevorzugt ausgewählt aus der Gruppe Acrylat-Kautschuk, Polyester-Urethan-Kautschuk, Polybutadien-Kautschuk, Ethylen-Acrylat Kautschuk, Ethylen-Propylen-Terpolymer, Ethylen-Propylen-Copolymer, Polyether-Urethankautschuk, Ethylen-Vinylacetat-Copolymer, Styrol-Butadien-Kautschuk.

Als phosphorhaltige Flammschutzmittel werden bevorzugt solche ausgewählt aus der Gruppe organische Phosphate, roter Phospor, Ammoniumpolyphosphat, Ammoniumphosphat eingesetzt.

In einer bevorzugten Ausführungsform enthält die Formmasse 20 bis 80 Gew.-% thermoplastisches Polymer und 5 bis 70 Gew-% phosphorhaltige Flammschutzmittel und 2 bis 70 Gew-% Blähgraphit. Vorzugsweise enthält das Ethylen-Vinylacetat-Copolymer 5 bis 95 Gew.-% Vinylacetat.

Der Blähgraphit besteht aus einem Gemisch von mindestens zwei verschiedenen Sorten von Blähgraphiten mit unterschiedlichen Eigenschaften. Der Blähgraphit enthält Blähgraphit I und Blähgraphit II, wobei sich der Blähgraphit I ab einer Temperatur von 200 °C und der Blähgraphit II ab einer Temperatur von 140 °C beginnt auszudehnen. Dem Fachmann sind diese unterschiedlichen Blähgraphite mit den entsprechenden Eigenschaften bzw. deren Herstellungsverfahren bekannt.

Die Blähgraphite werden durch chemische Behandlung von Graphit hergestellt. Bei der Behandlung des Graphits lagern sich die Behandlungsmittel, wie starke Säuren und/oder Wasserstoffperoxid, in die Gitterstruktur des Graphits ein.

In einer besonderen Ausführungsform weisen mehr als 80 % der Teilchen des Blähgraphits eine Teilchengröße von 30 bis 250 mesh auf.

In einer weiteren bevorzugten Ausführungsform weist der Blähgraphit bei einer Temperatur von 1000 °C eine Expansion von 20 bis 400 ml/g, besonders bevorzugt mindestens 200 bis 400 ml/g auf. Unter Verwendung dieser Blähgraphite lässt sich eine besonders geeignete Formmasse als Zwischenprodukt herstellen.

Mit der erfindungsgemäßen Formmasse können extrudierte Formteile und Spritzgussformteile mit besonders guten Eigenschaften hinsichtlich des passiven Brandschutzes hergestellt werden.

So wird die Aufgabe weiterhin gelöst durch ein extrudiertes Formteil, das aus der erfindungsgemäßen Formmasse hergestellt wird. Dabei enthält das extrudierte Formteil vorzugsweise 30 bis 40 Gew.-% Ethylen-Vinylacetat-Copolymer, 25 bis 35 Gew.-% Ammoniumpolyphosphat, 25 bis 35 Gew.-% Blähgraphit I und 1 bis 10 Gew.-% Blähgraphit II, wobei sich der Blähgraphit I ab einer Temperatur von 200 °C und der Blähgraphit II ab einer Temperatur von 140 °C beginnt auszudehnen.

In einer weiteren bevorzugten Ausführungsform enthält das extrudierte Formteil 35 Gew.-% Ethylen-Vinylacetat-Copolymer, 30 Gew.-% Ammoniumpolyphosphat, 29,15 Gew.-% Blähgraphit I und 5,85 Gew.-% Blähgraphit II.

Das extrudierte Formteil weist bei einer Temperatur von 450 °C vorzugsweise eine freie Ausdehnung von mindestens dem 10- bis 15-fachen der Ausgangsstärke auf. In einer bevorzugten Ausführungsform besitzt das extrudierte Formteil bei einer Temperatur von 300 °C einen Blähdruck von 0,3 bis 1,1 N/mm², besonders bevorzugt 0,3 bis 0,7 N/mm². In einer besonders bevorzugten Ausführungsform wird das Maximum des Blähdruckes bei einer Temperatur von 300 °C innerhalb von 8 bis 15 Sekunden erreicht.

Weiterhin wird die Aufgabe gelöst durch ein Spritzgussformteil oder ein Strangpressformteil, das aus der erfindungsgemäßen Formmasse hergestellt wird. Diese Formteile enthalten vorzugsweise 60 bis 70 Gew.-% Ethylen-Vinylacetat-Copolymer, 15 bis 20 Gew.-% Ammoniumpolyphosphat, 15 bis 20 Gew.-% Blähgraphit, wobei sich der Blähgraphit ab einer Temperatur von 200 °C beginnt auszudehnen.

In einer besonders bevorzugten Ausführungsform enthält das Spritzgussformteil 65 Gew.-% Ethylen-Vinylacetat-Copolymer, 17,5 Gew.-% Ammoniumpolyphosphat und 17,5 Gew.-% Blähgraphit.

Die erfindungsgemäßen extrudierten Streifen weisen hervorragende mechanische Eigenschaften wie hohe Zug- und Biegefestigkeit auf. Demgegenüber ist ein auf gleicher Weise extrudierter Streifen auf Basis von Polyethylen des Standes der Technik sehr steif und bricht bei bereits geringer Biegekraftanwendung. Die erfindungsgemäßen extrudierten Formteile erreichen bei einer Temperatur von 450 °C standardmäßig mindestens eine Expansion vom 10- bis 15-fachen der Ausgangsstärke. Bei einer Temperatur von 1000 °C beträgt die Expansion fast das Doppelte dieses Wertes. So ist eine Expansion vom 60-fachen der Ausgangsstärke bei 1000 °C möglich.

Die extrudierten Formteile blähen sich im Falle eines Brandes auf und hinterlassen einen stabilen Kohlenstoffschaum. Die extrudierten Formteile zeigen eine hohe Beständigkeit gegenüber Luftfeuchtigkeit, Wasser und sogar Seewasser. Ein weiterer Vorteil der erfindungsgemäßen extrudierten Formteile ist das sehr gute Frost/Auftauverhalten. Damit sind sie auch im Schiffbaubereich, in der Offshore-Industrie und anderen Nassbereichen wie in Lüftungskanälen und Schlachthöfen einsetzbar. Die erfindungsgemäßen Formteile sind faser- und halogenfrei, enthalten keine gefährlichen Chemikalien und stellen daher ein umweltfreundliches und gesundheitlich unbedenkliches Produkt dar. Sie lassen sich leicht weiter verarbeiten, beispielsweise kaschieren und stanzen, wodurch die Arbeitskosten gesenkt werden. Die erfindungsgemäßen Formteile beginnen vorteilhafter Weise bereits früher als andere Produkte auf dem Markt, nämlich ab einer Temperatur von 140 °C, zu expandieren und schäumen noch bei hohen Temperaturen (um 900 °C) nach. Dies bedeutet, dass das Produkt seine Wirkung früher entfaltet und diese bei hohen Temperaturen noch verstärkt wird.

Die erfindungsgemäßen spritzgegossenen Formteile besitzen ebenfalls eine ausgezeichnete Formstabilität mit dünnem Steg und scharfer Kante. Im Brandfall expandieren sie um das 5- bis 10-fache. Die erfindungsgemäßen Spritzgussformteile können auch im nicht aufgeblähten Zustand in dichtem Kontakt mit einer anderen glatten Oberfläche den Kontaktbereicht luftdicht abschließen. Dies bedeutet, dass diese Spritzgussformteile die Dichtungsfunktion auch bei Raumtemperatur übernehmen können.

Weiterhin wird die technische Aufgabe gelöst durch ein Verfahren zur Herstellung der erfindungsgemäßen extrudierten Formteile mit den folgenden Schritten:
a) Zudosieren des Polymers in einen Doppelschnecken- Compoundierextruder,
b) Aufschmelzen des Polymers
c) Zudosieren eines Gemisches enthaltend Blähgraphit und phosphorhaltiges Flammschutzmittel.
d) Extrusion der Formmasse in Streifen.

In einem bevorzugten Verfahren wird ein gleich laufender Doppelschnecken-Compoundierextruder verwendet.

In einem weiteren bevorzugten Verfahren beträgt die Verarbeitungstemperatur 135 bis 175 °C. Vorzugsweise beträgt der Massedruck 55 bis 90 bar, besonders bevorzugt 50 bis 60 bar.

Mit dem erfindungsgemäßen Verfahren lassen sich extrudierte Formteile entweder in Form von Streifen oder Rollen herstellen. Der Vorteil von flexiblen Rollen als Endprodukt liegt darin, dass hierbei der automatisierte Fertigungsprozess ermöglicht wird und der Transport und die Lagerung erleichtert wird. Während des Herstellungsverfahrens können unterschiedliche Blähgraphite eingemischt werden, um den Blähbeginn, das Blähvolumen und den Blähdruck zu steuern. Vorteilhafterweise werden verschiedene Blähgraphite eingemischt. In einer Variante des erfindungsgemäßen Produktes wird beispielsweise ein Blähgraphit mit niedriger Ansprechtemperatur (ca. 140 °C) eingesetzt. Da im Herstellungsverfahren die Temperatur meist über 150 °C liegt, expandiert der Blähgraphit bereits geringfügig während der Verarbeitung. Vorteilhafterweise werden dadurch Formteile erhalten, die schon bei der maximalen Verarbeitungstemperatur (ca. 160 °C) zu expandieren beginnen. Dieser Wert liegt niedriger als der solcher Produkte des Standes der Technik. Dabei stellt die geringfügige Expansion bei der Herstellung kein Problem dar.

Weiterhin wird die technische Aufgabe gelöst durch ein Verfahren zur Herstellung von Spritzgussformteilen oder Strangpressformteilen mit den folgenden Schritten:
a) Vormischen des Polymers, des Blähgraphits und des phosphorhaltigen Flammschutzmittels.
b) Aufbereitung des aufgeschmolzenen Polymers mit dem bei einer Temperatur von 160 °C nicht aufschmelzbaren Blähgraphit und dem phosphorhaltigen Flammschutzmittel zu einer spritzgussfähigen Masse,
c) Spritzgießen oder Strangpressen des Formteiles.

In einem bevorzugten Verfahren wird Schritt b) in einer Schnecke ausgeführt.

In einer weiteren bevorzugten Ausführungsform beträgt die Verarbeitungstemperatur in Schritt a) und b) 170 bis 185 °C. In einem besonders bevorzugten Verfahren beträgt in Schritt c) die Düsentemperatur 175 °C. In einer weiteren Ausführungsform beträgt der Druck in Schritt c) vorzugsweise 700 bis 800 bar, besonders bevorzugt 750 bar.

Mit dem erfindungsgemäßen Spritzgussverfahren können aus der erfindungsgemäßen Formmasse Spritzgussteile hergestellt werden, die die beschriebenen vorteilhaften Eigenschaften besitzen. So besitzen die spritzgegossenen Formteile eine ausgezeichnete Formstabilität mit dünnem Steg und scharfer Kante und können im Brandfall um ein Vielfaches expandieren. Die so hergestellten Spritzgussformteile können auch in dichtem Kontakt mit anderen glatten Oberflächen bereits bei Raumtemperatur die Dichtungsfunktion übemehmen.

Die technische Aufgabe wird zudem gelöst durch die Verwendung der erfindungsgemäßen Formmasse als Zwischenprodukt zur Herstellung von aufschäumenden Brandschutzformteilen in Form von extrudierten Formteilen und Spritzgussformteilen.

Weiterhin wird die technische Aufgabe gelöst durch die Verwendung der erfindungsgemäßen extrudierten Formteile, Spritzgussformteile und Strangpressformteile als Brandschutzmaterialien zur Abdichtung von Fugen und Hohlräumen zwischen Wänden und/oder Decken, im Fenster- und Türenrandbereich, in der Elektroinstaltation, insbesondere Brandschutztüren, Zargen, bei Wand- bzw. Deckendurchbrüchen für Versorgungsrohre oder -kanäle oder elektrische Kabel.

## Patentansprüche

1. Formmasse zur Herstellung von aufschäumenden Brandschutzformteilen, enthaltend ein Polymer ausgewählt aus thermoplastischem Elastomer oder thermoplastischem Ethylen-Vinylacetat-Copolymer, ein phosphorhaltiges Flammschutzmittel und Blähgraphit, wobei der Blähgraphit ein Gemisch aus mindestens zwei Sorten Blähgraphit I und Blähgraphit II mit unterschiedlichen Eigenschaften ist und sich der Blähgraphit I ab einer Temperatur von 200°C und der Blähgraphit II ab einer Temperatur von 140° C beginnt auszudehnen.

2. Formmasse nach Anspruch 1, **dadurch gekennzeichnet, dass** das thermoplastische Elastomer ausgewählt ist aus der Gruppe Acrylat-Kautschuk, Polyester-Urethan-Kautschuk, Polybutadien-Kautschuk, Ethylen-Acrylat Kautschuk, Ethylen-Propylen-Terpolymer, Ethylen-Propylen-Copolymer, Polyether-Urethankautschuk, Ethylen-Vinylacetat-Copolymer, Styrol-Butadien-Kautschuk.

3. Formmasse nach Anspruch 1 oder 2, **dadurch gekennzeichnet, dass** das phosphorhaltige Flammschutzmittel ausgewählt ist aus der Gruppe organische Phosphate, roter Phospor, Ammoniumpolyphosphat, Ammoniumphosphat.

4. Formmasse nach Ansprüchen 1 bis 3, **dadurch gekennzeichnet, dass** 20 bis 80 Gew.-% Polymer enthalten sind.

5. Formmasse nach Anspruch 1 bis 4, **dadurch gekennzeichnet, dass** das Ethylen-Vinylacetat-Copolymer 5 bis 95 Gew.-% Vinylacetat enthält.

6. Formmasse nach den Ansprüchen 1 bis 5, **dadurch gekennzeichnet, dass** 5 bis 70 Gew.-% phosphorhaltiges Flammschutzmittel enthalten sind.

7. Formmasse nach den Ansprüchen 1 bis 6, **dadurch gekennzeichnet, dass** 2 bis 70 Gew.-% Blähgraphit enthalten sind.

8. Formmasse nach Ansprüchen 1 bis 7, **dadurch gekennzeichnet, dass** mehr als 80 % der Teilchen des Blähgraphits eine Teilchengröße von 30-250 mesh besitzen.

9. Formmasse nach Ansprüchen 1 bis 8, **dadurch gekennzeichnet, dass** der Blähgraphit bei einer Temperatur von 1000 °C eine Expansion von 20-400 ml/g aufweist.

10. Extrudiertes Formteil, **dadurch gekennzeichnet, dass** es aus einer Formmasse gemäß den Ansprüchen 1 bis 9 hergestellt wird.

11. Extrudiertes Formteil nach Anspruch 10, enthaltend:
30 bis 40 Gew.-% Ethylen-Vinylacetat-Copolymer,
25 bis 35 Gew.-% Ammoniumpolyphosphat,
25 bis 35 Gew.-% Blähgraphit I, und
1 bis 10 Gew.-% Blähgraphit II,
wobei sich der Blähgraphit I ab einer Temperatur von 200 °C und der Blähgraphit II ab einer Temperatur von 140 °C beginnt auszudehnen.

12. Extrudiertes Formteil nach Anspruch 10 oder 11, enthaltend:
35 Gew.-% Ethylen-Vinylacetat-Copolymer,
30 Gew.-% Ammoniumpolyphosphat,
29,15 Gew.-% Blähgraphit I, und
5,85 Gew.-% Blähgraphit II.

13. Extrudiertes Formteil nach den Ansprüchen 10 bis 12, **dadurch gekennzeichnet, dass** es bei einer Temperatur von 450 °C eine freie Ausdehnung von mindestens dem 10 bis 15-fachen aufweist.

14. Extrudiertes Formteil nach den Ansprüchen 10 bis 13, **dadurch gekennzeichnet, dass** es bei einer Temperatur von 300 °C einen Blähdruck von 0,3 bis 1,1 N/mm², vorzugsweise 0,3 bis 0,7 N/mm² aufweist.

15. Spritzgussformteil oder Strangpressformteil, **dadurch gekennzeichnet, dass** es aus einer Formmasse gemäß den Ansprüchen 1 bis 9 hergestellt wird.

16. Spritzgussformteil oder Strangpressformteil nach Anspruch 15, enthaltend:
60 bis 70 Gew.-% Ethylen-Vinylacetat-Copolymer,
15 bis 20 Gew.-% Ammoniumpolyphosphat,
15 bis 20 Gew.-% Blähgraphit,
wobei der Blähgraphit ein Gemisch aus mindestens zwei Sorten Blähgraphit I und Blähgraphit II mit unterschiedlichen Eigenschaften ist und sich der Blähgraphit I ab einer Temperatur von 200°C und der Blähgraphit II ab einer Temperatur von 140° C beginnt auszudehnen.

17. Spritzgussformteil nach Anspruch 15 oder 16, enthaltend:
65 Gew.-% Ethylen-Vinylacetat-Copolymer,
17,5 Gew.-% Ammoniumpolyphosphat,
17,5 Gew.-% Blähgraphit,
wobei der Blähgraphit ein Gemisch aus mindestens zwei Sorten Blähgraphit I und Blähgraphit II mit unterschiedlichen Eigenschaften ist und sich der Blähgraphit I ab einer Temperatur von 200°C und der Blähgraphit II ab einer Temperatur von 140° C beginnt auszudehnen.

18. Verfahren zur Herstellung extrudierter Formteile gemäß den Ansprüchen 10 bis 14, **gekennzeichnet durch** die folgenden Schritte:
a) Zudosieren des Polymers in einen Doppelschnecken-Compoundier-Extruder,
b) Aufschmelzen des Polymers,
c) Zudosieren eines Gemisches enthaltend Blähgraphit,
wobei der Blähgraphit ein Gemisch aus mindestens zwei Sorten Blähgraphit I und Blähgraphit II mit unterschiedlichen Eigenschaften ist und sich der Blähgraphit I ab einer Temperatur von 200°C und der Blähgraphit II ab einer Temperatur von 140° C beginnt auszudehnen und phosphorhaltiges Flammschutzmittel
d) Extrusion der Formmasse in Streifen.

19. Verfahren nach Anspruch 18, **dadurch gekennzeichnet, dass** die Verarbeitungstemperatur 135 bis 175 °C beträgt.

20. Verfahren nach Anspruch 18 oder 19, **dadurch gekennzeichnet, dass** der Massedruck 55 bis 90 bar beträgt.

21. Verfahren nach den Ansprüchen 18 bis 20, **dadurch gekennzeichnet, dass** der Massedruck 50-60 bar beträgt.

22. Verfahren zur Herstellung eines Spritzgussformteiles oder Strangpressformteils gemäß den Ansprüchen 15 bis 17, **gekennzeichnet durch** die folgenden Schritte:
a) Vormischen des Polymers, des Blähgraphits und des phosphorhaltigen Flammschutzmittels,
b) Aufbereitung des aufgeschmolzenen Polymers mit dem bei einer Temperatur von 160 °C nicht aufschmelzbaren Blähgraphit, wobei der Blähgraphit ein Gemisch aus mindestens zwei Sorten Blähgraphit I und Blähgraphit II mit unterschiedlichen Eigenschaften ist und sich der Blähgraphit I ab einer Temperatur von 200°C und der Blähgraphit II ab einer Temperatur von 140° C beginnt auszudehnen, und phosphorhaltigem Flammschutzmittel zu einer spritzgussfähigen Masse,
c) Spritzgießen oder Strangpressen des Formteiles

23. Verfahren nach den Anspruch 22, **dadurch gekennzeichnet, dass** die Verarbeitungstemperatur in Schritt b) 170 bis 185 °C beträgt.

24. Verfahren nach Anspruch 22 oder 23, **dadurch gekennzeichnet, dass** in Schritt c) die Düsentemperatur 175 °C beträgt.

25. Verfahren nach den Ansprüchen 22 bis 24, **dadurch gekennzeichnet, dass** der Druck in Schritt c) 700 bis 800 bar, vorzugsweise 750 bar beträgt.

## Claims

1. A molding compound for the production of foaming fire-protection molded articles, said molding compound including a polymer selected from a thermoplastic elastomer or thermoplastic ethylene-vinyl acetate copolymer, a phosphorous flame retardant, and expandable graphite, said expandable graphite being a mixture of at least two types, expandable graphite I and expandable graphite II, having different properties, said expandable graphite I beginning expansion at a temperature from 200°C onwards and said expandable graphite II at a temperature from 140°C onwards.

2. The molding compound according to claim 1, **characterized in that** the thermoplastic elastomer is selected from the group of acrylate rubber, polyester-urethane rubber, polybutadiene rubber, ethylene-acrylate rubber, ethylene-propylene terpolymer, ethylene-propylene copolymer, polyether-urethane rubber, ethylene-vinyl acetate copolymer, styrenebutadiene rubber.

3. The molding compound according to claim 1 or 2, **characterized in that** the phosphorous flame retardant is selected from the group of organic phosphates, red phosphorus, ammonium polyphosphate, ammonium phosphate.

4. The molding compound according to claims 1 to 3, **characterized in that** the molding compound includes 20 to 80 wt.-% polymer.

5. The molding compound according to claims 1 to 4, **characterized in that** the ethylene-vinyl acetate copolymer includes 5 to 95 wt.-% vinyl acetate.

6. The molding compound according to claims 1 to 5, **characterized in that** the molding compound includes 5 to 70 wt.-% of a phosphorous flame retardant.

7. The molding compound according to claims 1 to 6, **characterized in that** the molding compound includes 2 to 70 wt.-% of expandable graphite.

8. The molding compound according to claims 1 to 7, **characterized in that** more than 80% of the expandable graphite particles have a particle size of from 30 to 250 mesh.

9. The molding compound according to claims 1 to 8, **characterized in that** the expandable graphite exhibits an expansion of from 20 to 400 ml/g at a temperature of 1000°C.

10. An extruded article, **characterized in that** the extruded article is produced using a compound in accordance with claims 1 to 9.

11. The extruded article according to claim 10, including:
30 to 40 wt.-% ethylene-vinyl acetate copolymer,
25 to 35 wt.-% ammonium polyphosphate,
25 to 35 wt.-% expandable graphite I, and
1 to 10 wt.-% expandable graphite II,
said expandable graphite I beginning expansion at a temperature from 200°C onwards and said expandable graphite II at a temperature from 140°C onwards.

12. The extruded article according to claim 10 or 11, including:
35 wt.-% ethylene-vinyl acetate copolymer,
30 wt.-% ammonium polyphosphate,
29.15 wt.-% expandable graphite I, and
5.85 wt.-% expandable graphite II.

13. The extruded article according to claims 10 to 12, **characterized in that** the extruded article exhibits a free expansion by at least 10 to 15 times at a temperature of 450°C.

14. The extruded article according to claims 10 to 13, **characterized in that** the extruded article exhibits an expansion pressure of from 0.3 to 1.1 N/mm², preferably from 0.3 to 0.7 N/mm², at a temperature of 300° C.

15. An injection-molded article or extruded article, **characterized in that** the article is produced using a compound in accordance with claims 1 to 9.

16. The injection-molded article or extruded article according to claim 15, including:
60 to 70 wt.-% ethylene-vinyl acetate copolymer,
15 to 20 wt.-% ammonium polyphosphate,
15 to 20 wt.-% expandable graphite,
said expandable graphite being a mixture of at least two types, expandable graphite I and expandable graphite II, having different properties, said expandable graphite I beginning expansion at a temperature from 200°C onwards and said expandable graphite II at a temperature from 140°C onwards.

17. The injection-molded article according to claim 15 or 16, including:
65 wt.-% ethylene-vinyl acetate copolymer,
17.5 wt.-% ammonium polyphosphate,
17.5 wt.-% expandable graphite,
said expandable graphite being a mixture of at least two types, expandable graphite I and expandable graphite II, having different properties, said expandable graphite I beginning expansion at a temperature from 200°C onwards and said expandable graphite II at a temperature from 140°C onwards.

18. A process for the production of extruded articles in accordance with claims 10 to 14, **characterized by** the following steps:
a) metering the polymer into a double-screw compounding extruder,
b) melting the polymer,
c) metering a mixture including expandable graphite,
said expandable graphite being a mixture of at least two types, expandable graphite I and expandable graphite II, having different properties, said expandable graphite I beginning expansion at a temperature from 200°C onwards and said expandable graphite II at a temperature from 140°C onwards,
d) extruding the compound into strips.

19. The process according to claim 18, **characterized in that** the processing temperature is from 135 to 175°C.

20. The process according to claim 18 or 19, **characterized in that** the compound pressure is from 55 to 90 bars.

21. The process according to claim 18 to 20, **characterized in that** the compound pressure is from 50 to 60 bars.

22. A process for the production of the injection-molded article or extruded article in accordance with claims 15 to 17, **characterized by** the following steps:
a) initial mixing of polymer, expandable graphite and phosphorous flame retardant,
b) processing the molten polymer with the expandable graphite, which cannot be melted at a temperature of 160°C, said expandable graphite being a mixture of at least two types, expandable graphite I and expandable graphite II, having different properties, said expandable graphite I beginning expansion at a temperature from 200 °C onwards and said expandable graphite II at a temperature from 140°C onwards, and the phosphorous flame retardant to form an injection-moldable compound,
c) injection-molding or extruding the article.

23. The process according to claim 22, **characterized in that** the processing temperature in step b) is from 170 to 185°C.

24. The process according to claim 22 or 23, **characterized in that** the nozzle temperature in step c) is 175°C.

25. The process according to claims 22 to 24, **characterized in that** the pressure in step c) is from 700 to 800 bars, preferably 750 bars.

## Revendications

1. Masse à mouler pour fabriquer des pièces moulées moussantes de protection contre l'incendie, contenant un polymère choisi parmi un élastomère thermoplastique ou un copolymère éthylène-acétate de vinyle thermoplastique, un agent de protection contre la flamme contenant du phosphore et du graphite porogène, le graphite porogène étant un mélange formé d'au moins deux sortes, le graphite porogène I et le graphite porogène II ayant des caractéristiques différentes, et le graphique porogène I commençant à se dilater à partir d'une température de 200°C et le graphique porogène II commençant à se dilater à partir d'une température de 140°C.

2. Masse à mouler selon la revendication 1, **caractérisée en ce que** l'élastomère thermoplastique est choisi dans le groupe comprenant le caoutchouc acrylate, le caoutchouc polyester-uréthane, le caoutchouc polybutadiène, le caoutchouc éthylène-acrylate, le terpolymère éthylène-propylène, le copolymère éthylène-propylène, le caoutchouc polyéther-uréthane, le copolymère éthylène-acétate de vinyle, le caoutchouc styrène-butadiène.

3. Masse à mouler selon la revendication 1 ou 2, **caractérisée en ce que** l'agent de protection contre la flamme, contenant du phosphore, est choisi dans le groupe de phosphates organiques, de phosphore rouge, de polyphosphate d'ammonium, de phosphate d'ammonium.

4. Masse à mouler selon les revendications 1 à 3, **caractérisée ce qu**'elle contient 20 à 80 % en poids de polymère.

5. Masse à mouler selon l'une des revendications 1 à 4, **caractérisée en ce que** le copolymère éthylène-acétate de vinyle contient 5 à 95 % en poids d'acétate de vinyle.

6. Masse à mouler selon l'une des revendications 1 à 5, **caractérisée en ce qu'**elle contient 5 à 70 % en poids d'un agent de protection contre la flamme contenant du phosphore.

7. Masse à mouler selon l'une des revendications 1 à 6, **caractérisée en ce qu'**elle contient 2 à 70 % en poids de graphite porogène.

8. Masse à mouler selon l'une des revendications 1 à 7, **caractérisée en ce que** plus de 80 % des particules du graphite porogène possèdent une taille de particules de 30-250 mesh.

9. Masse à mouler selon l'une des revendications 1 à 8, **caractérisée en ce que** le graphite porogène présente une expansion de 20 à 400 ml/g à une température de 1000°C.

10. Pièce moulée extrudée, **caractérisée en ce qu'**elle fabriquée à partir d'une masse à mouler conformément aux revendications 1 à 9.

11. Pièce moulée extrudée selon la revendication 10, contenant:
30 à 40 % en poids d'un copolymère éthylène-acétate de vinyle,
25 à 35 % en poids de polyphosphate d'ammonium,
25 à 35 % en poids de graphite porogène I, et
1 à 10 % en poids de graphite porogène II,
le graphite porogène I commençant à se dilater à partir d'une température de 200°C et le graphite porogène II à partir d'une température de 140°C.

12. Pièce moulée extrudée selon la revendication 10 ou 11, contenant:
35 % en poids d'un copolymère éthylène-acétate de vinyle,
30 % en poids de polyphosphate d'ammonium,
29,15 % en poids de graphite porogène I, et
5,85 % en poids de graphite porogène II.

13. Pièce moulée extrudée selon l'une des revendications 10 à 12, **caractérisée en ce qu'**elle possède une dilatation libre d'un facteur d'au moins 10 à 15 fois à une température de 450°C.

14. Pièce moulée extrudée selon l'une des revendications 10 à 13, **caractérisée en ce qu'**à une température de 300°C, elle possède une pression de gonflement comprise entre 0,3 et 1,1 N/mm² et de préférence entre 0,3 et 0,7 N/mm².

15. Pièce moulée par moulage par injection ou pièce moulée formée par extrusion, **caractérisée en ce qu'**elle est fabriquée à partir d'une masse à mouler conforme à l'une des revendications 1 à 9.

16. Pièce moulée par moulage par injection ou pièce moulée formée par extrusion, selon la revendication 15, contenant:
60 à 70 % en poids de copolymère éthylène-acétate de vinyle,
15 à 20 % en poids de polyphosphate d'ammonium,
15 à 20 % en poids de graphite porogène,
dans laquelle le graphite porogène est un mélange formé d'au moins deux sortes, le graphite porogène I et le graphite porogène II ayant des caractéristiques différentes, et le graphique porogène I commençant à se dilater à partir d'une température de 200°C et le graphique porogène II commençant à se dilater à partir d'une température de 140°C.

17. Pièce moulée par moulage par injection selon la revendication 15 ou 16, contenant:
65 % en poids en poids de copolymère éthylène-acétate de vinyle,
17,5 % en poids de polyphosphate d'ammonium,
17,5 % en poids de graphite porogène,
dans laquelle le graphite porogène est un mélange formé d'au moins deux sortes, le graphite porogène I et le graphite porogène II ayant des caractéristiques différentes, et le graphique porogène I commençant à se dilater à partir d'une température de 200°C et le graphique porogène II commençant à se dilater à partir d'une température de 140°C.

18. Procédé pour fabriquer des pièces moulées . extrudées conformément à l'une des revendications 10 à 14, **caractérisé par** les étapes suivantes consistant à:
a) amener de façon dosée le polymère dans une extrudeuse compoundeuse à deux vis,
b) faire fondre le polymère,
c) amener de façon dosée un mélange contenant du graphite porogène, le graphite porogène étant un mélange un mélange formé d'au moins deux sortes, le graphite porogène I et le graphite porogène II ayant des caractéristiques différentes, et le graphique porogène I commençant à se dilater à partir d'une température de 200°C et le graphique porogène II commençant à se dilater à partir d'une température de 140°C, et un agent de protection contre la flamme contenant du phosphore,
d) extruder la masse à mouler sous la forme de bandes.

19. Procédé selon la revendication 18, **caractérisé en ce que** la température du traitement est comprise entre 135 et 175°C.

20. Procédé selon la revendication 18 ou 19, **caractérisé en ce que** la pression de la masse est comprise entre 55 et 90 bars.

21. Procédé selon l'une des revendications 18 à 20, **caractérisé en ce que** la pression de la masse est comprise entre 50 et 60 bars.

22. Procédé pour fabriquer une pièce moulée formée par moulage par injection ou par extrusion selon l'une des revendications 15 à 17, **caractérisé par** les étapes suivantes:
a) mélanger préalablement le polymère, le graphite porogène et l'agent de protection contre les flammes contenant du phosphore,
b) traiter le polymère fondu avec le graphite porogène, qui ne peut pas être fondu à une température de 160°C, le graphite porogène étant un mélange d'au moins deux sortes, le graphite porogène I et le graphite porogène II ayant des caractéristiques différentes, et le graphique porogène I commençant à se dilater à partir d'une température de 200°C et le graphique porogène II commençant à se dilater à partir d'une température de 140°C, et un agent de protection contre la flamme contenant du phosphore pour former une masse apte à être moulée par injection,
c) mouler par injection ou par extrusion la pièce moulée.

23. Procédé selon la revendication 22, **caractérisé en ce que** la température de traitement lors de l'étape b) est comprise entre 170 et 180°C.

24. Procédé selon la revendication 22 ou 23, **caractérisé en ce que** lors de l'étape c), la température de buse est égale à 175°C.

25. Procédé selon l'une des revendications 22 à 24, **caractérisé en ce que** la pression lors de l'étape c) est comprise entre 700 et 800 bars et de préférence est égale à 450 bars.
